# EUROPEAN PATENT APPLICATION

(11) **EP 4 841 534 A1**
(43) Date of publication of application: **18.11.2026**
(21) Application number: 25761790.2
(22) Date of filing: 08.01.2025
(51) Int. Cl.: G06Q 10/047, G01C 21/34, G16Y 10/40, G16Y 20/20, G16Y 40/60

(54) **ROUTE GENERATION DEVICE, ROUTE GENERATION METHOD, AND ROUTE GENERATION PROGRAM**

(30) Priority: 29.02.2024 JP 2024029449
(71) Applicant: Mitsubishi Heavy Industries, Ltd., Chiyoda-ku Tokyo 100-8332 (JP)
(72) Inventor: YAMAGUCHI Takumi, Tokyo 100-8332 (JP)
(74) Representative: Hoffmann Eitle
(86) International application number: PCT/JP2025/000380
(87) International publication number: WO 2025/182305

(57) **Abstract**

A route generation device (10) includes a processing device (13) configured to search for a plurality of routes (R1 to R4) of which at least one of a start point (S1 to S4) and a goal point (G) is different. The processing device is configured to start searching for the plurality of routes at the same time and search for the routes in parallel while comparing information (S) on the plurality of routes.

## Description

### Technical Field

The present disclosure relates to a route generation device, a route generation method, and a route generation program.

### Background Art

In the related art, a system that searches for an optimal route of a vehicle including a ship, an aircraft, and the like has been known. For example, an optimal route search system of PTL 1 includes a cost calculation device, a storage device, a route search device, and a display device. Based on performance data of the ship and marine weather data, the cost calculation device calculates, as prediction data, a cost or a weight based on at least a ship speed, a fuel consumption, and a sea margin among a plurality of nodes set from a specific sea area to a destination. The storage device stores the prediction data. The route search device searches for an optimal route from the specific sea area to the destination based on the prediction data stored in the storage device. The display device displays a route map based on the optimal route searched by the route search device.

### Citation List

### Patent Literature

[PTL 1] Japanese Unexamined Patent Application Publication No. 2007-057499

### Summary of Invention

### Technical Problem

The system of PTL 1 searches for a route between two points. Route search technology is used in various industrial fields. In some industrial fields, it is required to efficiently search for a plurality of routes.

### Solution to Problem

A route generation device according to an aspect of the present disclosure includes a processing device configured to search for a plurality of routes of which at least one of a start point and a goal point is different. The processing device is configured to start searching for the plurality of routes at the same time and search for the routes in parallel while comparing information on the plurality of routes.

A route generation method according to an aspect of the present disclosure includes starting to search, at the same time, for a plurality of routes of which at least one of a start point and a goal point is different, and searching for the plurality of routes in parallel while comparing information on the plurality of routes.

A route generation program according to an aspect of the present disclosure causes a computer to execute a process of starting to search, at the same time, for a plurality of routes of which at least one of a start point and a goal point is different, and a process of searching for the plurality of routes in parallel while comparing information on the plurality of routes.

### Brief Description of Drawings

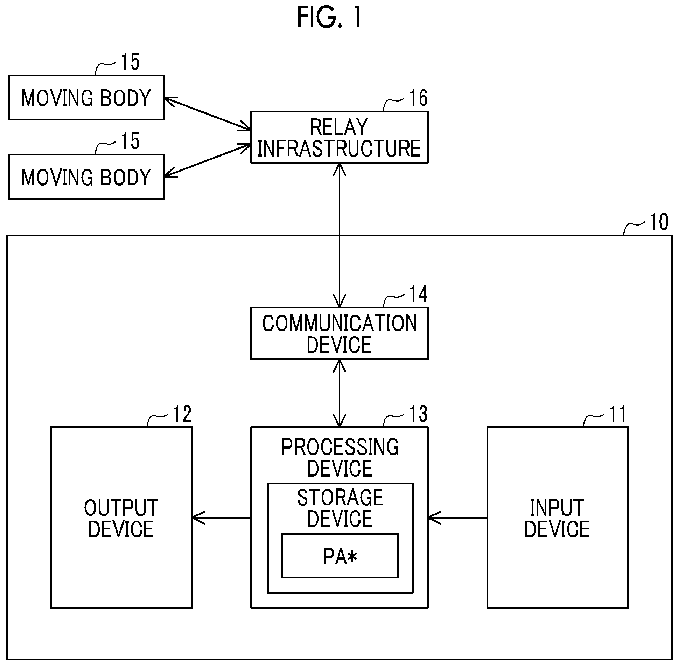

[FIG. 1] FIG. 1 is a block diagram showing a configuration of a route generation device according to an embodiment.

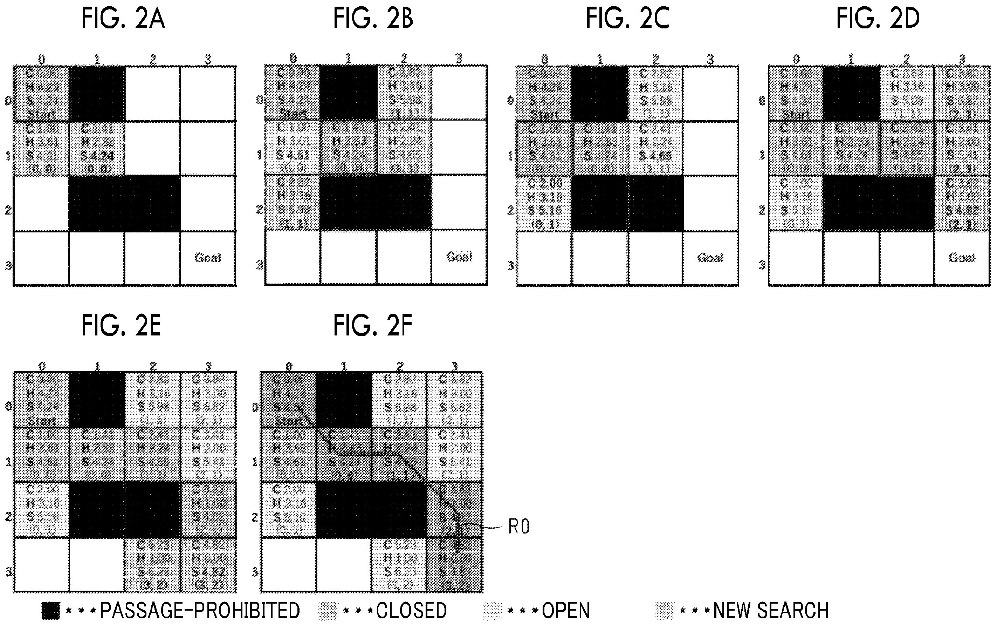

[FIG. 2] FIGS. 2A to 2F are schematic diagrams of a search range showing a route search example using an A* algorithm according to the embodiment. The schematic diagram of FIG. 2A shows a first stage of a route search. The schematic diagram of FIG. 2B shows a second stage of the route search. The schematic diagram of FIG. 2C shows a third stage of the route search. The schematic diagram of FIG. 2D shows a fourth stage of the route search. The schematic diagram of FIG. 2E shows a fifth stage of the route search. The schematic diagram of FIG. 2F shows a sixth stage of the route search.

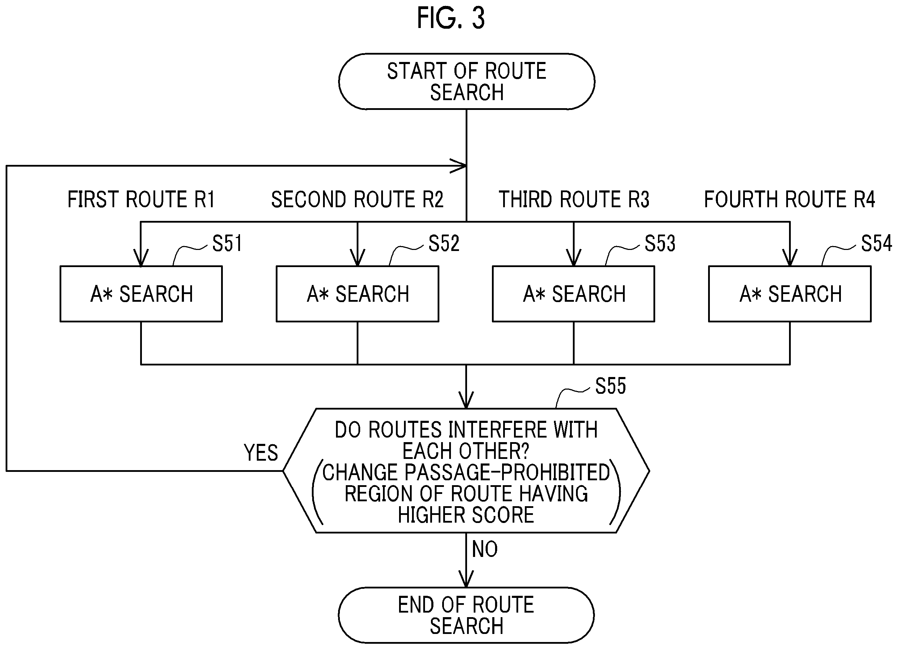

[FIG. 3] FIG. 3 is a flowchart showing an outline of a procedure of route search processing using a PA* algorithm according to the embodiment.

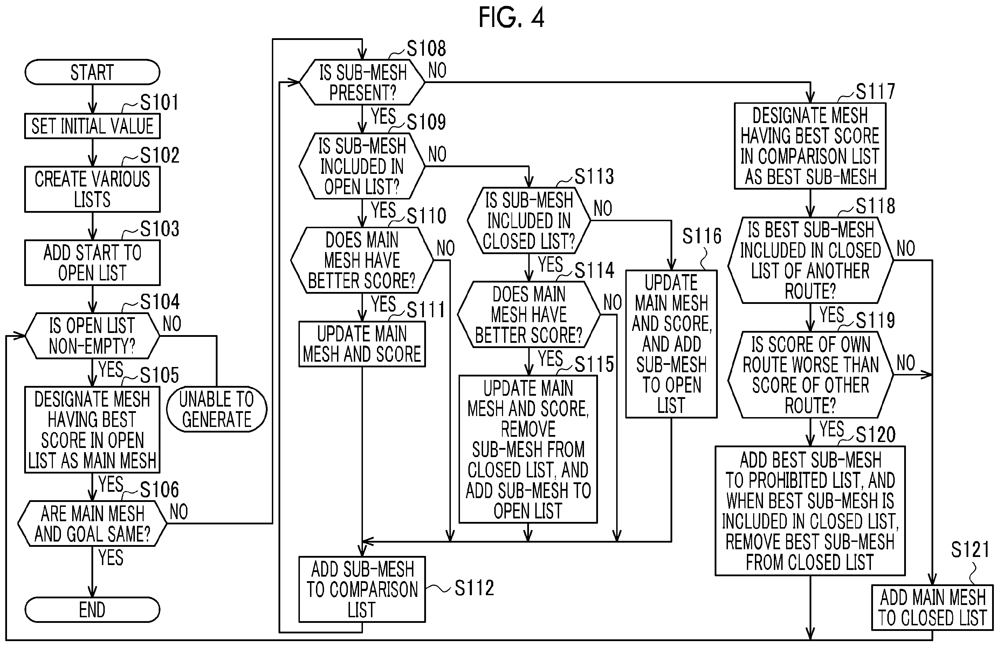

[FIG. 4] FIG. 4 is a flowchart showing details of the procedure of the route search processing using the PA* algorithm according to the embodiment.

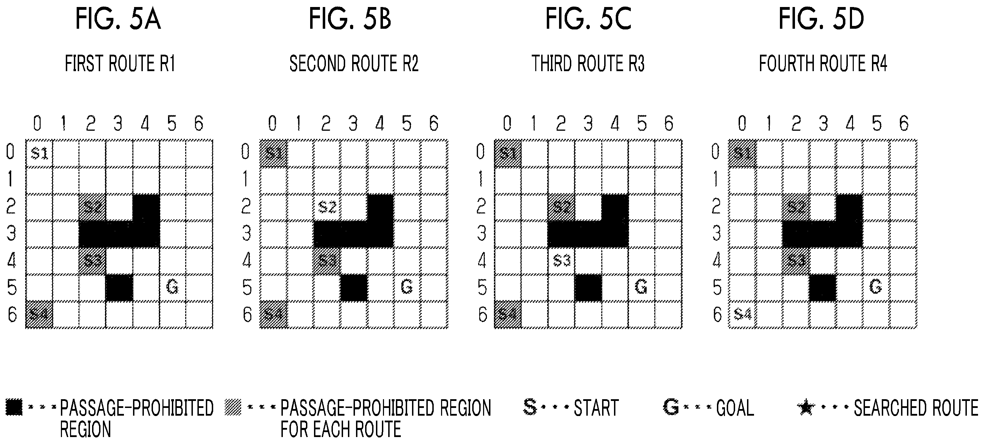

[FIG. 5] FIGS. 5A to 5D are maps for describing a route search example using the PA* algorithm according to the embodiment. The map of FIG. 5A shows an initial state of a first route. The map of FIG. 5B shows an initial state of a second route. The map of FIG. 5C shows an initial state of a third route. The map of FIG. 5D shows an initial state of a fourth route.

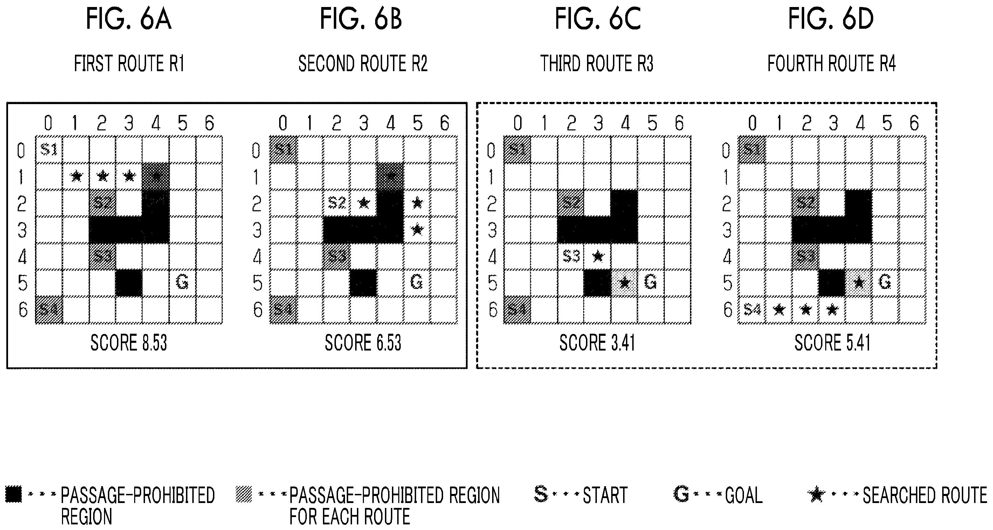

[FIG. 6] FIGS. 6A to 6D are maps for describing a route search example using the PA* algorithm according to the embodiment. The map of FIG. 6A shows search progress of the first route. The map of FIG. 6B shows search progress of the second route. The map of FIG. 6C shows search progress of the third route. The map of FIG. 6D shows search progress of the fourth route.

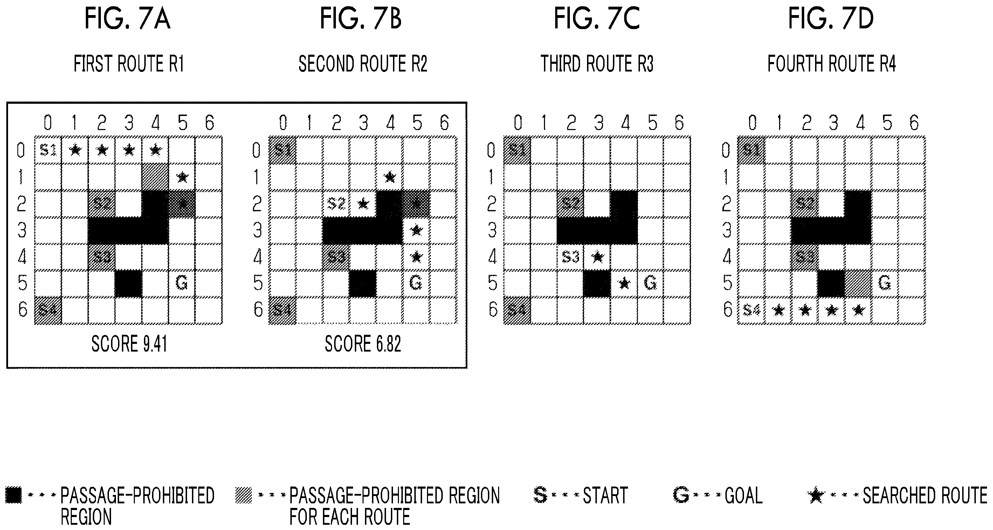

[FIG. 7] FIGS. 7A to 7D are maps for describing a route search example using the PA* algorithm according to the embodiment. The map of FIG. 7A shows search progress of the first route. The map of FIG. 7B shows search progress of the second route. The map of FIG. 7C shows search progress of the third route. The map of FIG. 7D shows search progress of the fourth route.

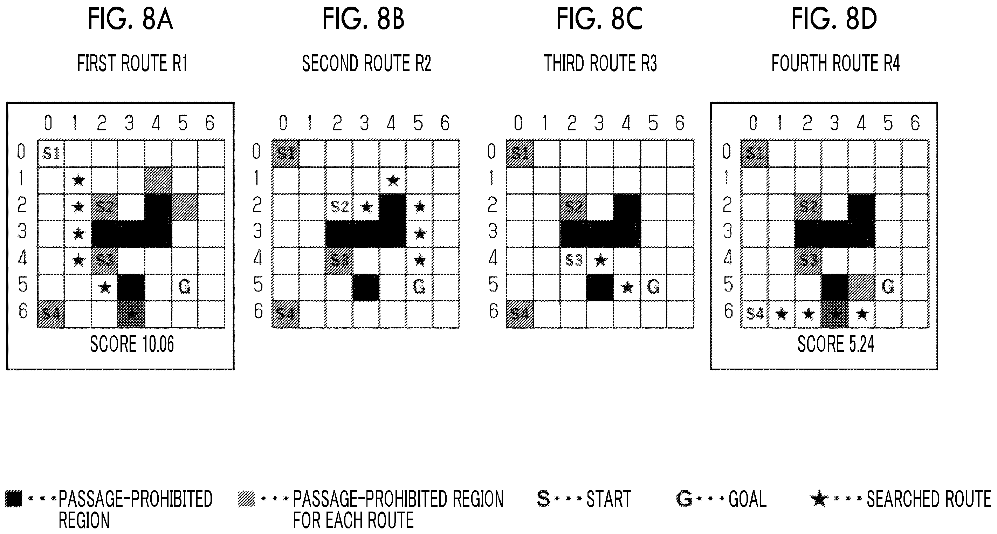

[FIG. 8] FIGS. 8A to 8D are maps for describing a route search example using the PA* algorithm according to the embodiment. The map of FIG. 8A shows search progress of the first route. The map of FIG. 8B shows search progress of the second route. The map of FIG. 8C shows search progress of the third route. The map of FIG. 8D shows search progress of the fourth route.

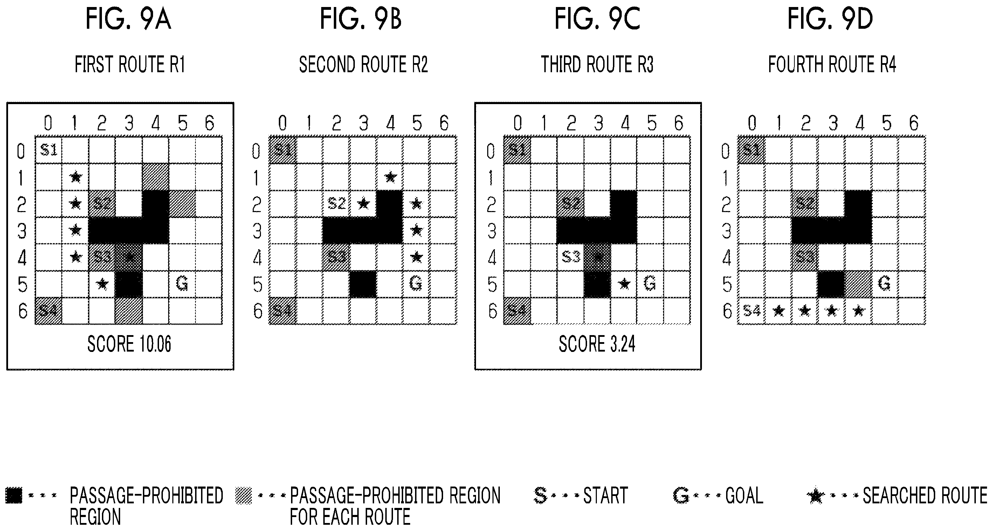

[FIG. 9] FIGS. 9A to 9D are maps for describing a route search example using the PA* algorithm according to the embodiment. The map of FIG. 9A shows search progress of the first route. The map of FIG. 9B shows search progress of the second route. The map of FIG. 9C shows search progress of the third route. The map of FIG. 9D shows search progress of the fourth route.

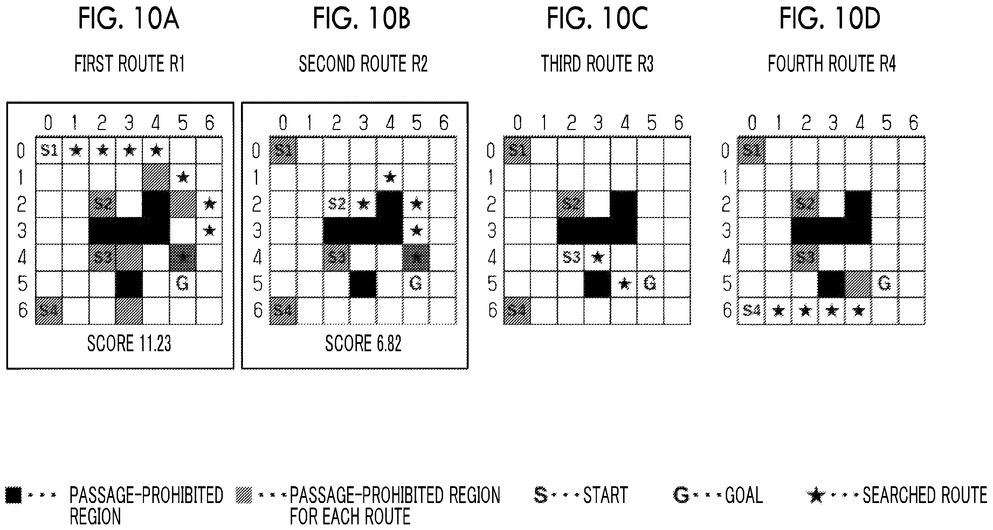

[FIG. 10] FIGS. 10A to 10D are maps for describing a route search example using the PA* algorithm according to the embodiment. The map of FIG. 10A shows search progress of the first route. The map of FIG. 10B shows search progress of the second route. The map of FIG. 10C shows search progress of the third route. The map of FIG. 10D shows search progress of the fourth route.

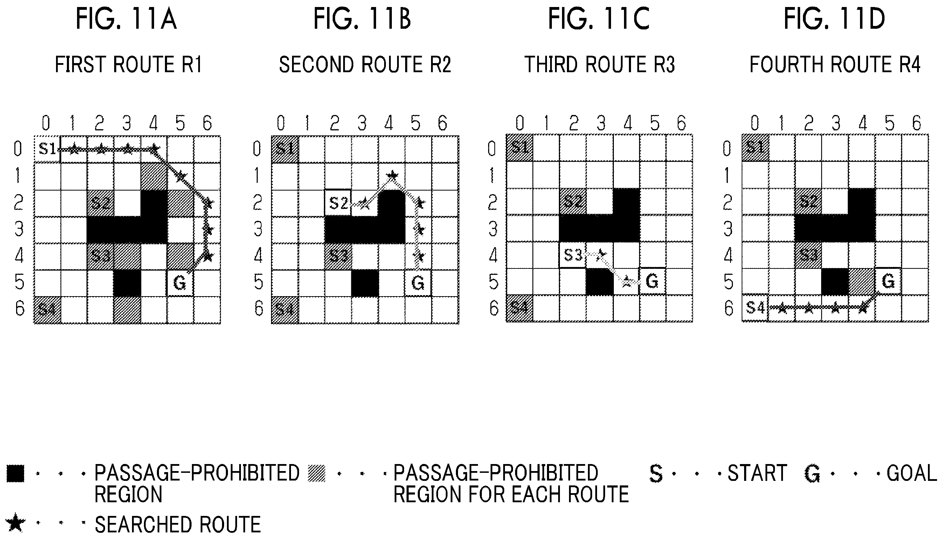

[FIG. 11] FIGS. 11A to 11D are maps for describing a route search example using the PA* algorithm according to the embodiment. The map of FIG. 11A shows search progress of the first route. The map of FIG. 11B shows search progress of the second route. The map of FIG. 11C shows search progress of the third route. The map of FIG. 11D shows search progress of the fourth route.

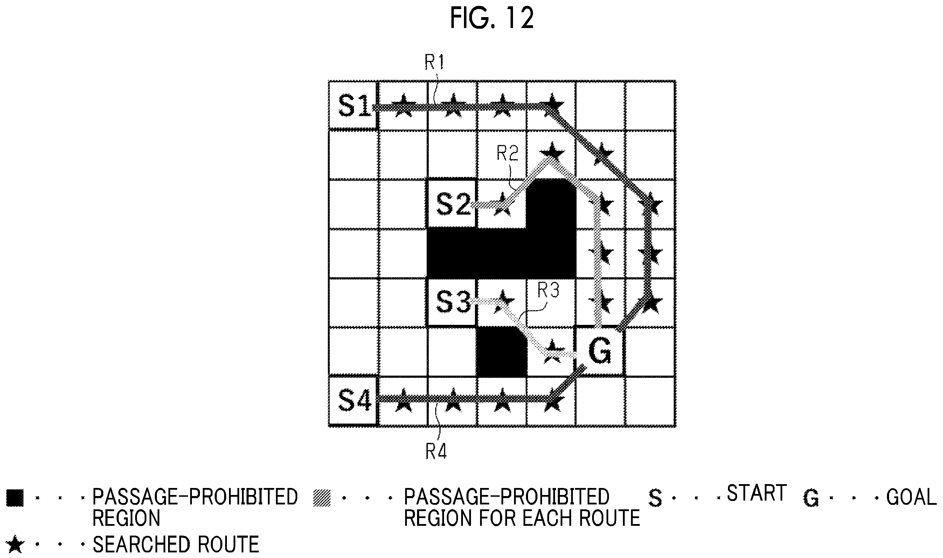

[FIG. 12] FIG. 12 is a map for describing an example of a route search result using the PA* algorithm according to the embodiment.

### Description of Embodiments

Hereinafter, an embodiment of a route generation device, a route generation method, and a route generation program will be described.

As shown in FIG. 1, a route generation device 10 includes an input device 11, an output device 12, a processing device 13, and a communication device 14.

The input device 11 includes, for example, a keyboard and a mouse, and is used for inputting various types of information. The information is a request or an instruction from an operator. The information is, for example, information necessary for generating a route of a vehicle 15, and includes a departure point and a destination of the vehicle 15, a departure time from the departure point, an arrival time at the destination, a route change instruction, and a route creation instruction.

The vehicle 15 includes an aircraft. The aircraft includes an unpiloted aircraft and an unmanned aircraft. The unpiloted aircraft is an aircraft provided with a device that enables flying without a pilot on board, among those that carry a person and that can be used for aviation. The unmanned aircraft is an aircraft that can be remotely or autonomously operated to fly, among those that can be used for aviation and that cannot carry a person for structural reasons.

The vehicle 15 includes a ship. The ship includes an autonomous ship. The autonomous ship is a ship that can navigate without human operation of a device related to navigation, using an autonomous control function. The autonomous ship includes an unmanned ship. The unmanned ship is a ship without a crew on board and has, for example, an autonomous navigation function of navigating at a predetermined speed along a set route while avoiding obstacles.

The output device 12 outputs various types of information. The output device 12 includes a display device that visually displays information. Examples of the display device include an electroluminescence display, a liquid crystal display, a light-emitting diode (LED) display, and a plasma display. The information includes, for example, route information of the vehicle 15 generated by the processing device 13.

The processing device 13 includes a processing circuit having any one of the following three configurations A1, A2, and A3.

A1. One or more processors that operate in accordance with a computer program which is software. The processor includes a central processing unit (CPU) and a memory.

A2. One or more dedicated hardware circuits, such as an application-specific integrated circuit, that execute at least some of various types of processing.

A3. A combination of the configurations A1 and A2.

The memory is a computer-readable medium and stores a program in which processing or an instruction for a computer is described. In the present embodiment, the computer is a CPU. The memory includes a random-access memory (RAM) and a read-only memory (ROM). The CPU executes various controls by executing the program stored in the memory at a predetermined operation cycle.

The processing device 13 includes a storage device 13A. The storage device 13A includes an auxiliary storage device such as a hard disk, and stores various programs and data. The CPU of the processing device 13 implements, based on an instruction from the input device 11, various functions by reading the program from the storage device 13A into the memory and executing the program read into the memory.

The program includes a route search program. The route search program is a program based on a route search algorithm. The route search algorithm is an algorithm for generating a route from the departure point to the destination of the vehicle 15. In the present embodiment, a Parallel A-Star (PA*) algorithm is adopted as the route search algorithm. The PA* algorithm is an algorithm that uses an A* algorithm, which is a type of best-first search, and is an algorithm for searching for a plurality of routes at the same time. The processing device 13 calculates the route of the vehicle 15 by executing the route search program based on information input via the input device 11. Details of the A* algorithm and the PA* algorithm will be described later.

The communication device 14 can communicate with the vehicle 15 via a relay infrastructure 16. The relay infrastructure 16 includes various types of communication equipment and communication networks that serve as a foundation for relaying communication between the communication device 14 and the vehicle 15. The communication equipment includes, for example, a base station that is a radio station installed on the ground, a satellite station that is a radio station mounted in an artificial satellite, and an unmanned aircraft station that is a radio station mounted in a small unmanned aircraft. The communication network includes, for example, the Internet, a satellite communication network, and a radio relay network using a small radio-controlled aircraft.

The communication device 14 exchanges information with the vehicle 15 via the relay infrastructure 16 in accordance with an instruction from the processing device 13. Information transmitted from the communication device 14 to the vehicle 15 includes the route information indicating the route of the vehicle 15 generated by the processing device 13. The vehicle 15 receives the route information and moves based on the received route information. Information received from the vehicle 15 by the communication device 14 includes information necessary for generating the route of the vehicle 15 via the processing device 13, such as passage prohibition information of the vehicle 15, weather information, and current position information of the vehicle 15.

### <A* Algorithm>

Next, the A* algorithm will be described.

In the A* algorithm, a search range is divided into a plurality of designated meshes, and a mesh of which a score S is better is searched with priority. Accordingly, the shortest route between two points can be generated. The meshes are sub-regions into which the search range is divided. In the present embodiment, for convenience of description, the search range is set as a square projected onto a two-dimensional plane, and the search range is divided into vertical and horizontal square meshes. A position of each mesh is represented by a distance from an origin set in the search range to each mesh. That is, the position of each mesh can be represented by XY coordinates that are coordinates on an X axis as the horizontal direction of the search range and a Y axis as the vertical direction of the search range.

As shown in Equation (1) below, the score S is a sum of an actual cost C and an$S = C + H$ (1) estimated cost H. A lower value of the score S indicates a better score S.

The actual cost C is a movement distance from a start point to a current point. The actual cost Cᵢ at the current point is represented by Equation (2) below.

${C}_{i} = {C}_{i} -1 + α \left(vertical or horizontal α = 1, and diagonal α = √2\right)$ (2)

Here, "Cᵢ₋₁" is an actual cost at a movement start point. "α" is a movement cost of each mesh. The movement cost α for vertically or horizontally moving the search range is "1". The movement cost α for diagonally moving the search range is "√2".

The estimated cost H is the shortest distance from the current point to a goal point. The estimated cost H is represented by Equation (3) below.$H = √ \left\{{\left({x}_{i} - {x}_{g}\right)}^{2} +{\left( {y}_{i} - {y}_{g}\right)}^{2}\right\}$ (3)

Here, "xᵢ" is a value of the X coordinate at the current point. "xg_{"} is a value of the X coordinate at the goal point. "yi_{"} is a value of the Y coordinate at the current point. "y_{g}" is a value of the Y coordinate at the goal point.

Since the shortest distance from the current point to the goal point is used as the estimated cost H, a value of the estimated cost H decreases as the goal point is reached. Thus, the search is performed with priority from a mesh close to the goal point. Accordingly, the shortest route from the start point to the goal point can be efficiently generated.

### <Example of Search Using A^{*} Algorithm>

Next, a search example using the A^{*} algorithm will be described.

As shown in FIG. 2A, for example, a case where the search range is divided into meshes of 5 rows and 5 columns is considered. The start point and the goal point are set in advance. For example, the start point is the coordinates (0, 0), and the goal point is the coordinates (3, 3). Meshes at the coordinates (1, 0), the coordinates (1, 2), and the coordinates (2, 2) are passage-prohibited regions. Passage-prohibited meshes are registered in a passage-prohibited list prepared in advance. The search is not performed for meshes registered in the passage-prohibited list. Thus, a route that bypasses the passage-prohibited meshes can be generated.

In addition to the passage-prohibited list, an open list and a closed list are also prepared in advance. The open list and the closed list are initially empty. OPEN is registered in the open list during the route search. OPEN refers to a search candidate mesh. CLOSE is registered in the closed list during the route search. CLOSE refers to a searched candidate mesh. The processing device 13 is the main agent of the route search.

### <First Stage>

When the route search starts, the start point is added to the open list. When the start point is added to the open list, its score S is obtained. As shown in FIG. 2A, the score S at the start point is "4.24". In addition, a mesh having the lowest value of the score S in the open list is designated as a "parent mesh". Currently, only the start point is registered in the open list. Thus, the start point is the "parent mesh". The "parent mesh" is a mesh serving as a reference for the next mesh to be added to the open list.

Next, whether a "child mesh" that is a mesh adjacent to the "parent mesh" is present is checked. As shown in FIG. 2A, two unsearched "child meshes" are present except the passage-prohibited mesh at the coordinates (1, 0). The "child meshes" are meshes at the coordinates (0, 1) and the coordinates (1, 1).

Thus, two "child meshes" are added to the open list, and the scores S of the two "child meshes" are obtained. The score S of the mesh at the coordinates (0, 1) is "4.61". The score S of the mesh at the coordinates (1, 1) is "4.24". The value of the score S is stored together with the coordinates of the "parent mesh". The coordinates of the current "parent mesh" are the coordinates (0, 0) of the start point. In FIG. 2A, the coordinates of the "parent mesh" are shown at the bottom of each mesh, that is, below the score S.

The role of the current "parent mesh" in adding adjacent meshes to the open list is completed. Thus, the current "parent mesh" is added to the closed list.

### <Second Stage>

Next, as shown in FIG. 2B, a mesh having the lowest value of the score S in the current open list is designated as the "parent mesh". Currently, two meshes are registered in the open list. The coordinates of the two meshes are the coordinates (0, 1) and the coordinates (1, 1). The mesh at the coordinates (1, 1) has the lowest value of the score S out of the two meshes. Thus, the mesh at the coordinates (1, 1) is designated as a new "parent mesh".

Next, whether a "child mesh" that is a mesh adjacent to the "parent mesh" is present is checked. As shown in FIG. 2B, three unsearched "child meshes", one "child mesh" included in the open list, and one "child mesh" included in the closed list are present except three passage-prohibited meshes at the coordinates (1, 0), the coordinates (1, 2), and the coordinates (2, 2).

The coordinates of the unsearched "child meshes" are the coordinates (0, 2), the coordinates (2, 0), and the coordinates (2, 1). The coordinates of the "child mesh" included in the open list are the coordinates (0, 1). Thus, the three unsearched "child meshes" are added to the open list, and the scores S of the three "child meshes" are obtained. The score S of the mesh at the coordinates (0, 2) is "5.98". The score S of the mesh at the coordinates (2, 0) is "5.98". The score S of the mesh at the coordinates (2, 1) is "4.65". The value of the score S is stored together with the coordinates of the "parent mesh". The coordinates of the current "parent mesh" are the coordinates (1, 1).

The coordinates of the "child mesh" included in the closed list are the coordinates (0, 0). The score S at the coordinates (0, 0) is "4.24", which is the same as the score S of the current "parent mesh". That is, the value of the score S of the current "parent mesh" is not lower than the value of the score S of the "child mesh" included in the closed list. Thus, the "child mesh" at the coordinates (0, 0) is maintained in a state of being registered in the closed list.

When the search for all "child meshes" is finished, the current "parent mesh" at the coordinates (1, 1) is added to the closed list.

### <Third Stage>

Next, a mesh having the lowest value of the score S in the current open list is designated as the "parent mesh". Currently, four meshes are registered in the open list. The coordinates of the four meshes are the coordinates (0, 1), the coordinates (0, 2), the coordinates (2, 0), and the coordinates (2, 1). The mesh at the coordinates (0, 1) has the lowest value of the score S among the four meshes. Thus, as shown in FIG. 2C, the mesh at the coordinates (0, 1) is designated as a new "parent mesh".

Next, whether a "child mesh" that is a mesh adjacent to the "parent mesh" is present is checked. As shown in FIG. 2C, one "child mesh" included in the open list and two "child meshes" included in the closed list are present except two passage-prohibited meshes at the coordinates (1, 0) and the coordinates (1, 2).

The coordinates of the "child mesh" included in the open list are the coordinates (0, 2). The score S of the mesh at the coordinates (0, 2) immediately before designating the mesh at the coordinates (0, 1) as a new "parent mesh" is "5.98". The score S of the "parent mesh" at the coordinates (0, 1) is "4.61", which is lower than the value of the score S of the "child mesh" at the coordinates (0, 2). Thus, the value of the score S of the "child mesh" at the coordinates (0, 2) and the coordinates of the "parent mesh" are updated. The score S of the "child mesh" at the coordinates (0, 2) is updated from "5.98" in FIG. 2B to "5.16" in FIG. 2C. The coordinates of the "parent mesh" of the "child mesh" at the coordinates (0, 2) are updated from the coordinates (1, 1) in FIG. 2B to the coordinates (0, 1) in FIG. 2C.

The coordinates of the two "child meshes" included in the closed list are the coordinates (0, 0) and the coordinates (1, 1). The value of the score S of the "parent mesh" at the coordinates (0, 1) is higher than the values of the scores S of the two "child meshes" included in the closed list. Thus, the "child mesh" at the coordinates (0, 0) and the "child mesh" at the coordinates (1, 1) are maintained in a state of being registered in the closed list.

When the search for all "child meshes" is finished, the current "parent mesh" at the coordinates (0, 1) is added to the closed list.

### <Fourth Stage>

Next, a mesh having the lowest value of the score S in the current open list is designated as the "parent mesh". As shown in FIG. 2C, three meshes are currently registered in the open list. The coordinates of the three meshes are the coordinates (0, 2), the coordinates (2, 0), and the coordinates (2, 1). The mesh at the coordinates (2, 1) has the lowest value of the score S among the three meshes. Thus, as shown in FIG. 2D, the mesh at the coordinates (2, 1) is designated as a new "parent mesh".

Next, whether a "child mesh" that is a mesh adjacent to the "parent mesh" is present is checked. As shown in FIG. 2D, three unsearched "child meshes", one "child mesh" included in the open list, and one "child mesh" included in the closed list are present except three passage-prohibited meshes at the coordinates (1, 0), the coordinates (1, 2), and the coordinates (2, 2).

The coordinates of the unsearched "child meshes" are the coordinates (3, 0), the coordinates (3, 1), and the coordinates (3, 2). The coordinates of the "child mesh" included in the open list are the coordinates (2, 0). Thus, the three unsearched "child meshes" are added to the open list, and their scores S are obtained. The score S of the mesh at the coordinates (3, 0) is "6.82". The score S of the mesh at the coordinates (3, 1) is "5.41". The score S of the mesh at the coordinates (3, 2) is "4.82". The value of the score S is stored together with the coordinates of the "parent mesh". The coordinates of the current "parent mesh" are the coordinates (2, 1).

The coordinates of the "child mesh" included in the closed list are the coordinates (1, 1). The score S at the coordinates (1, 1) is "4.24", which is lower than the value of the score S of the current "parent mesh". That is, the value of the score S of the current "parent mesh" is higher than the value of the score S of the "child mesh" included in the closed list. Thus, the "child mesh" at the coordinates (1, 1) is maintained in a state of being registered in the closed list.

When the search for all "child meshes" is finished, the current "parent mesh" at the coordinates (2, 1) is added to the closed list.

### <Fifth Stage>

Next, a mesh having the lowest value of the score S in the current open list is designated as the "parent mesh". Currently, five meshes are registered in the open list. The coordinates of the five meshes are the coordinates (0, 2), the coordinates (2, 0), the coordinates (3, 0), the coordinates (3, 1), and the coordinates (3, 2). The mesh at the coordinates (3, 2) has the lowest value of the score S among the five meshes. Thus, as shown in FIG. 2E, the mesh at the coordinates (3, 2) is designated as a new "parent mesh".

Next, whether a "child mesh" that is a mesh adjacent to the "parent mesh" is present is checked. As shown in FIG. 2E, two unsearched "child meshes", one "child mesh" included in the open list, and one "child mesh" included in the closed list are present except the passage-prohibited mesh at the coordinates (2, 2).

The coordinates of the unsearched "child meshes" are the coordinates (2, 3) and the coordinates (3, 3). The coordinates of the "child mesh" included in the open list are the coordinates (3, 1). Thus, the two unsearched "child meshes" are added to the open list, and their scores S are obtained. The score S of the "child mesh" at the coordinates (2, 3) is "6.23". The score S of the "child mesh" at the coordinates (3, 3) is "4.82". The value of the score S is stored together with the coordinates of the "parent mesh". The coordinates of the current "parent mesh" are the coordinates (3, 2).

The coordinates of the "child mesh" included in the closed list are the coordinates (2, 1). The score S at the coordinates (2, 1) is "4.65", which is lower than the value of the score S of the current "parent mesh". That is, the value of the score S of the current "parent mesh" is higher than the value of the score S of the "child mesh" included in the closed list. Thus, the "child mesh" at the coordinates (2, 1) is maintained in a state of being registered in the closed list.

When the search for all "child meshes" is finished, the current "parent mesh" at the coordinates (3, 2) is added to the closed list.

### <Sixth Stage>

Next, a mesh having the lowest value of the score S in the current open list is designated as the "parent mesh". Currently, six meshes are registered in the open list. The coordinates of the six meshes are the coordinates (0, 2), the coordinates (2, 0), the coordinates (2, 3), the coordinates (3, 0), the coordinates (3, 1), and the coordinates (3, 2). The mesh at the coordinates (3, 3) has the lowest value of the score S among the six meshes. Thus, as shown in FIG. 2F, the mesh at the coordinates (3, 3) is designated as a new "parent mesh". The coordinates of the "parent mesh" are the coordinates of the goal point. Thus, the route search is finished. The shortest route R0 from the start point to the goal point is generated by tracing the "parent mesh" back from the goal point.

According to the A^{*} algorithm, the shortest route from a single start point to a single goal point can be generated. However, in the route search using the A^{*} algorithm, a plurality of routes cannot be generated at the same time. The route includes a route from a plurality of start points to a single goal point, a route from a single start point to a plurality of goal points, and a route from a plurality of start points to a plurality of goal points. Therefore, in the present embodiment, the PA^{*} algorithm is adopted as the route search algorithm.

### <Outline of PA^{*} Algorithm>

Next, an outline of the PA* algorithm will be described.

The PA^{*} algorithm is an algorithm for searching for a plurality of routes at the same time and searching for the routes in parallel while comparing information on each route. In order to search for the plurality of routes in parallel, it is necessary to prepare independent maps for each route in the PA^{*} algorithm. The map is, for example, a two-dimensional map showing the search range of the route and has the X axis which is a horizontal axis, and the Y axis which is a vertical axis.

As shown in FIG. 3, the processing device 13 searches for the plurality of routes at the same time (steps S51 to S54). In the example in FIG. 3, the number of routes is four including a first route R1 to a fourth route.

In addition, the processing device 13 determines whether the routes interfere with each other (step S55). Interference means overlapping between an own route and another route. For example, if the first route R1 is set as the own route, the second route R2 to the fourth route R4 are other routes.

For example, if two routes interfere with each other, the processing device 13 compares the scores S of overlapping meshes of the two routes and adds the overlapping meshes to the passage-prohibited list of the route of which the score S is worse, that is, the value of the score S is higher. Then, the processing device 13 performs the search again until the routes overlap with each other again (YES in step S55).

If the routes do not overlap with each other, and the coordinates of the "parent mesh" of each route match the coordinates of the goal point, the processing device 13 finishes the search for each route (NO in step S55).

When a mesh of the own route that is being searched is included in the closed list of the other route, the processing device 13 determines that the routes overlap with each other. Accordingly, the processing device 13 can search for the own route by considering the other route. In the PA^{*} algorithm, the global shortest route can be generated regardless of a search order of each route. In addition, in the PA^{*} algorithm, a priority reference for route generation is determined by the score S instead of the search order. Thus, the global shortest route of each route can be generated.

### <Procedure of Route Search Processing Using PA^{*} Algorithm>

Next, a procedure of route search processing using the PA^{*} algorithm will be described in detail. The route includes a plurality of routes.

As shown in FIG. 4, when execution of the route search processing starts, the processing device 13 first sets an initial value (step S101). Setting of the initial value includes setting of the start point, the goal point, and the map which is the search range. The number of start points, the number of goal points, and the number of maps are the same as the number of routes to be searched for. The initial value is input via the input device 11. The map is divided into meshes of a plurality of rows and a plurality of columns. A position of each mesh on the map can be represented by coordinates that are a combination of a position in a row direction and a position in a column direction.

Next, the processing device 13 creates various lists (step S102). The lists include the open list, the closed list, a comparison list, and a passage-prohibited list. The number of open lists, the number of closed lists, the number of comparison lists, and the number of passage-prohibited lists are the same as the number of routes to be searched for. The open list, the closed list, and the comparison list are initially empty. OPEN that is a mesh of a search candidate is registered in the open list during the route search. CLOSE that is a mesh already searched is registered in the closed list during the route search. A mesh to be compared is registered in the comparison list during the route search. The passage-prohibited mesh is registered in the passage-prohibited list. The processing device 13 does not search the mesh registered in the passage-prohibited list.

Next, the processing device 13 adds the start point to the open list (step S103) and checks whether the open list is non-empty (step S104). When the open list is empty (NO in step S104), the processing device 13 cannot generate a route. Thus, the route search processing is finished. When the open list is non-empty (YES in step S104), the processing device 13 proceeds to step S105.

In step S105, the processing device 13 designates a mesh having the lowest value of the score S in the open list as the "parent mesh" serving as a reference. When execution of the route search processing starts, only the start point is registered in the open list. Thus, the start point is the "parent mesh".

Next, the processing device 13 determines whether the "parent mesh" and the goal point are the same (step S106). When the parent mesh and the goal point are the same (YES in step S106), the processing device 13 finishes the route search processing. The shortest route from the start point to the goal point can be generated by tracing the "parent mesh" back from the goal point. When the parent mesh and the goal point are not the same (NO in step S106), the processing device 13 proceeds to step S108.

In step S108, the processing device 13 determines whether a "child mesh" is present. The "child mesh" is a mesh adjacent to the "parent mesh". When the "child mesh" is present (YES in step S108), the processing device 13 determines whether the "child mesh" is included in the open list (step S109). When the "child mesh" is included in the open list (YES in step S109), the processing device 13 proceeds to step S110.

In step S110, the processing device 13 determines whether the score S of the "parent mesh" is better than the score S of the "child mesh" included in the open list, that is, whether the value of the score S of the "parent mesh" is lower than the value of the score S of the "child mesh" included in the open list. When the score S of the "parent mesh" is better than the score S of the "child mesh" included in the open list (YES in step S110), the processing device 13 updates the "parent mesh" and the score S of the "child mesh" included in the open list (step S111). Then, the processing device 13 adds the "child mesh" to the comparison list (step S112) and proceeds to previous step S108.

In previous step S110, when the score S of the "parent mesh" is not better than the score S of the "child mesh" included in the open list (NO in step S110), the processing device 13 adds the "child mesh" included in the open list to the comparison list (step S112) and proceeds to previous step S108. In this case, the "parent mesh" and the score S of the "child mesh" are not updated.

In previous step S109, when the "child mesh" is not included in the open list (NO in step S109), the processing device 13 determines whether the "child mesh" is included in the closed list (step S113). When the "child mesh" is included in the closed list (YES in step S113), the processing device 13 proceeds to step S114.

In step S114, the processing device 13 determines whether the score S of the "parent mesh" is better than the score S of the "child mesh" included in the closed list, that is, whether the value of the score S of the "parent mesh" is lower than the value of the score S of the "child mesh" included in the closed list. When the score S of the "parent mesh" is better than the score S of the "child mesh" included in the closed list (YES in step S114), the processing device 13 proceeds to step S115. A lower value of the score S means a better score S.

In step S115, the processing device 13 updates the "parent mesh" and the score S of the "child mesh" included in the closed list. In addition, the processing device 13 removes the "child mesh" from the closed list and adds the "child mesh" to the open list. Then, the processing device 13 adds the "child mesh" to the comparison list (step S112) and proceeds to previous step S108.

In previous step S114, when the score S of the "parent mesh" is not better than the score S of the "child mesh" included in the closed list (NO in step S114), the processing device 13 adds the "child mesh" to the comparison list (step S112) and proceeds to previous step S108.

In previous step S113, when the "child mesh" is not included in the closed list (NO in step S113), the processing device 13 updates the "parent mesh" and the score S of the "child mesh" and adds the "child mesh" to the open list (step S116). Then, the processing device 13 adds the "child mesh" to the comparison list (step S112) and proceeds to previous step S108.

In previous step S108, when the "child mesh" is not present (NO in step S108), the processing device 13 designates a mesh having the best score S in the comparison list as a "best child mesh" (step S117) and proceeds to step S118. A lower value of the score S means a better score S.

In step S118, the processing device 13 checks whether the "best child mesh" is included in the closed list of the other route. When the "best child mesh" is included in the closed list of the other route (YES in step S118), the processing device 13 proceeds to step S119.

In step S119, the processing device 13 checks whether the score S of the own route is worse than the score S of the other route. The score S of the own route is the score S of the "best child mesh". The score S of the other route is the score S of a mesh that is included in the closed list of the other route and that overlaps with the "best child mesh" of the own route. A higher value of the score S means a worse score S.

When the score S of the own route is worse than the score S of the other route (YES in step S119), the processing device 13 adds the "best child mesh" to the passage-prohibited list (step S120). When the "best child mesh" is included in the closed list of the own route, the "best child mesh" is removed from the closed list. Then, the processing device 13 proceeds to previous step S104.

In previous step S119, when the score S of the own route is not worse than the score S of the other route (NO in step S119), the processing device 13 adds the "parent mesh" to the closed list (step S121) and proceeds to previous step S104. A case where the score S of the own route is not worse than the score S of the other route is a case where the score S of the own route is better than the score S of the other route.

In previous step S118, when the "best child mesh" is not included in the closed list of the other route (NO in step S118), the processing device 13 adds the "parent mesh" to the closed list (step S121) and proceeds to previous step S104.

When the "parent mesh" is the same as the goal point, the processing device 13 finishes the route search. The processing device 13 generates the shortest route from the start point to the goal point by tracing the "parent mesh" back from the goal point.

### <Example of Search Using PA^{*} Algorithm>

Next, a search example using the PA^{*} algorithm will be described. A search condition includes, for example, the following three conditions B1, B2, and B3.

B1. The search range is divided into meshes of seven rows and seven columns.

B2. There are four searched routes including the first route R1 to the fourth route R4.

B3. It is not allowed to pass through the same mesh.

When execution of the search for each route starts, the processing device 13 first sets the initial value. Specifically, the initial value is as follows.

### <Initial State>

As shown in FIGS. 5A to 5D, maps corresponding to each of the first route R1, the second route R2, the third route R3, and the fourth route R4 are set. Each map shows the search range of each route.

The first route R1 shown in FIG. 5A is a route from a first start point S1 to a goal point G. Coordinates of the first start point S1 are, for example, the coordinates (0, 0). Coordinates of the goal point G are, for example, the coordinates (5, 5).

The second route R2 shown in FIG. 5B is a route from a second start point S2 to the goal point G. Coordinates of the second start point S2 are, for example, the coordinates (2, 2). Coordinates of the goal point G are the coordinates (5, 5), which are the same as the goal point G of the first route R1.

The third route R3 shown in FIG. 5C is a route from a third start point S3 to the goal point G. Coordinates of the third start point S3 are, for example, the coordinates (2, 4). Coordinates of the goal point G are the coordinates (5, 5), which are the same as the goal point G of the first route R1.

The fourth route R4 shown in FIG. 5D is a route from a fourth start point S4 to the goal point G. Coordinates of the fourth start point S4 are, for example, the coordinates (0, 6). Coordinates of the goal point G are the coordinates (5, 5), which are the same as the goal point G of the first route R1.

A common passage-prohibited region is set in each map. Coordinates of the passage-prohibited region are, for example, the coordinates (2, 3), the coordinates (3, 3), the coordinates (3, 5), the coordinates (4, 2), and the coordinates (4, 3). In each map, the common passage-prohibited region is shown by a black mesh. In addition, a unique passage-prohibited region is set in each map. In each map, the unique passage-prohibited region is shown by a gray mesh.

Coordinates of the unique passage-prohibited region in the map of the first route R1 are the coordinates (2, 2) of the second start point S2, the coordinates (2, 4) of the third start point S3, and the coordinates (0, 6) of the fourth start point S4.

Coordinates of the unique passage-prohibited region in the map of the second route R2 are the coordinates (0, 0) of the first start point S1, the coordinates (2, 4) of the third start point S3, and the coordinates (0, 6) of the fourth start point S4.

Coordinates of the unique passage-prohibited region in the map of the third route R3 are the coordinates (0, 0) of the first start point S1, the coordinates (2, 2) of the second start point S2, and the coordinates (0, 6) of the fourth start point S4.

Coordinates of the unique passage-prohibited region in the map of the fourth route R4 are the coordinates (0, 0) of the first start point S1, the coordinates (2, 2) of the second start point S2, and the coordinates (2, 4) of the third start point S3.

### <Start of Search for All Routes>

When setting of the initial value is completed, the processing device 13 starts searching for the first route R1, the second route R2, the third route R3, and the fourth route R4 at the same time.

As shown in FIGS. 6A to 6D, the processing device 13 searches for each route (R1 to R4) in accordance with the PA^{*} algorithm. In each map, a searched route is shown by a star mark. The routes may overlap with each other during the search processing. For example, as shown in FIGS. 6A and 6B, the first route R1 and the second route R2 overlap with each other at the coordinates (4, 1). In addition, as shown in FIGS. 6C and 6D, the third route R3 and the fourth route R4 overlap with each other at the coordinates (4, 5). When the routes overlap with each other, the processing device 13 compares the scores S of the overlapping meshes.

Specifically, the processing device 13 compares the score S of the mesh at the coordinates (4, 1) on the first route R1 with the score S of the mesh at the coordinates (4, 1) on the second route R2. The score S of the mesh at the coordinates (4, 1) on the first route R1 is "8.53", and the score S of the mesh at the coordinates (4, 1) on the second route R2 is "6.53".

In addition, the processing device 13 compares the score S of the mesh at the coordinates (4, 5) on the third route R3 with the score S of the mesh at the coordinates (4, 5) on the fourth route R4. The score S of the mesh at the coordinates (4, 5) on the third route R3 is "3.41", and the score S of the mesh at the coordinates (4, 5) on the fourth route R4 is "5.41".

As shown in FIGS. 7A and 7B, the processing device 13 updates the passage-prohibited region of the route of which the score S is worse, that is, the value of the score S is higher, out of the mesh at the coordinates (4, 1) on the first route R1 and the mesh at the coordinates (4, 1) on the second route R2. The processing device 13 designates the mesh at the coordinates (4, 1) on the first route R1 as the passage-prohibited region. The passage-prohibited region is designated by adding the target mesh to the passage-prohibited list.

In addition, as shown in FIGS. 7C and 7D, the processing device 13 updates the passage-prohibited region of the route of which the score S is worse, that is, the value of the score S is higher, out of the mesh at the coordinates (4, 5) on the third route R3 and the mesh at the coordinates (4, 5) on the fourth route R4. The processing device 13 designates the mesh at the coordinates (4, 5) on the fourth route R4 as the passage-prohibited region. Then, the processing device 13 performs the route search again until the routes overlap with each other again.

As a result of the search performed again, this time the first route R1 and the second route R2 overlap with each other at the coordinates (5, 2), as shown in FIGS. 7A and 7B. The processing device 13 compares the score S of the mesh at the coordinates (5, 2) on the first route R1 with the score S of the mesh at the coordinates (5, 2) on the second route R2. The score S of the mesh at the coordinates (5, 2) on the first route R1 is "9.41", and the score S of the mesh at the coordinates (5, 2) on the second route R2 is "6.82".

For the third route R3 and the fourth route R4, the route search proceeds without overlapping with another route, as shown in FIGS. 7C and 7D.

As shown in FIGS. 8A and 8B, the processing device 13 updates the passage-prohibited region of the route of which the score S is worse, that is, the value of the score S is higher, out of the mesh at the coordinates (5, 2) on the first route R1 and the mesh at the coordinates (5, 2) on the second route R2. The processing device 13 designates the mesh at the coordinates (5, 2) on the first route R1 as the passage-prohibited region. Then, the processing device 13 performs the route search again until the routes overlap with each other again.

As a result of the search performed again, this time the first route R1 and the fourth route R4 overlap with each other at the coordinates (3, 6), as shown in FIGS. 8A and 8D. The processing device 13 compares the score S of the mesh at the coordinates (3, 6) on the first route R1 with the score S of the mesh at the coordinates (3, 6) on the fourth route R4. The score S of the mesh at the coordinates (3, 6) on the first route R1 is "10.06", and the score S of the mesh at the coordinates (3, 6) on the fourth route R4 is "5.24".

For the second route R2 and the third route R3, the route search proceeds without overlapping with another route, as shown in FIGS. 8B and 8C.

As shown in FIGS. 9A and 9D, the processing device 13 updates the passage-prohibited region of the route of which the score S is worse, that is, the value of the score S is higher, out of the mesh at the coordinates (3, 6) on the first route R1 and the mesh at the coordinates (3, 6) on the second route R2. The processing device 13 designates the mesh at the coordinates (3, 6) on the first route R1 as the passage-prohibited region. Then, the processing device 13 performs the route search again until the routes overlap with each other again.

As a result of the search performed again, this time the first route R1 and the third route R3 overlap with each other at the coordinates (3, 4), as shown in FIGS. 9A and 9C. The processing device 13 compares the score S of the mesh at the coordinates (3, 4) on the first route R1 with the score S of the mesh at the coordinates (3, 4) on the third route R3. The score S of the mesh at the coordinates (3, 4) on the first route R1 is "10.06", and the score S of the mesh at the coordinates (3, 4) on the third route R3 is "3.24".

For the second route R2 and the fourth route R4, the route search proceeds without overlapping with another route, as shown in FIGS. 9B and 9D.

As shown in FIGS. 10A and 10C, the processing device 13 updates the passage-prohibited region of the route of which the score S is worse, that is, the value of the score S is higher, out of the mesh at the coordinates (3, 4) on the first route R1 and the mesh at the coordinates (3, 4) on the third route R3. The processing device 13 designates the mesh at the coordinates (3, 4) on the first route R1 as the passage-prohibited region. Then, the processing device 13 performs the route search again until the routes overlap with each other again.

As a result of the search performed again, this time the first route R1 and the second route R2 overlap with each other at the coordinates (5, 4), as shown in FIGS. 10A and 10B. The processing device 13 compares the score S of the mesh at the coordinates (5, 4) on the first route R1 with the score S of the mesh at the coordinates (5, 4) on the second route R2. The score S of the mesh at the coordinates (5, 4) on the first route R1 is "11.23", and the score S of the mesh at the coordinates (5, 4) on the second route R2 is "6.82".

For the third route R3 and the fourth route R4, the route search proceeds without overlapping with another route, as shown in FIGS. 10C and 10D.

As shown in FIGS. 11A and 11B, the processing device 13 updates the passage-prohibited region of the route of which the score S is worse, that is, the value of the score S is higher, out of the mesh at the coordinates (5, 4) on the first route R1 and the mesh at the coordinates (5, 4) on the second route R2. The processing device 13 designates the mesh at the coordinates (5, 4) on the first route R1 as the passage-prohibited region. Then, the processing device 13 performs the route search again until the routes overlap with each other again.

When all "leading meshes" of the first route R1 to the fourth route R4 match the goal point G before the routes overlap with each other again, the processing device 13 finishes the route search processing. As shown in FIGS. 11A to 11D, in the map of each route (R1 to R4), the processing device 13 generates the shortest route from each start point (S1 to S4) to the goal point G by tracing the "parent mesh" back from the goal point G. The "parent mesh" is the searched route and is shown by a star mark on each map.

As shown in FIG. 12, each of the routes (R1 to R4) is generated without a detour. In addition, each of the routes (R1 to R4) is generated not to intersect with each other. That is, a plurality of routes that are globally optimized can be derived by executing the route search processing using the PA^{*} algorithm. Global optimization includes generation of the global shortest route for the plurality of routes (R1 to R4).

In the same manner as generation of the routes from the plurality of start points (S1 to S4) to the single goal point G, routes from a single start point to a plurality of goal points or routes from a plurality of start points to a plurality of goal points can be generated.

### <Effects of Embodiment>

According to the present embodiment, the following effects can be obtained.
(1) The route generation device 10 includes the processing device 13 configured to search for the plurality of routes of which at least one of the start point and the goal point is different. The processing device 13 starts searching for the plurality of routes at the same time and searches for the routes in parallel while comparing the information on the plurality of routes. The information is, for example, the score S. According to this configuration, it is possible to search for the routes by considering another route. Accordingly, it is possible to efficiently search for the plurality of routes.
(2) The processing device 13 divides each of the plurality of maps, each being independently set for each of the routes, into vertical and horizontal meshes and searches for the mesh having a low value of the score S calculated for each mesh with priority. The score S is the sum of the actual cost C which is the movement distance from the start point to the current point, and the estimated cost H which is the shortest distance from the current point to the goal point. The processing device 13 searches for the routes while comparing the scores S for each of the routes. According to this configuration, it is possible to efficiently search for the plurality of routes by searching for the routes while comparing the scores S for each of the routes.
(3) The processing device 13, when two of the plurality of routes overlap with each other to have an overlapping part, compares the score S of the overlapping mesh that is the mesh corresponding to the overlapping part of one route, with the score S of the overlapping mesh that is the mesh corresponding to the overlapping part of the other route. The processing device 13 sets the overlapping mesh of the route having a higher value of the score S as the passage-prohibited region and searches for the routes again until the routes overlap with each other again. According to this configuration, it is possible to generate the global shortest route for the plurality of routes by repeating the setting of the passage-prohibited region and the searching for the routes again through comparison between the scores S for each of the routes.
(4) The processing device 13, when the mesh of an own route that is being searched is included in the mesh of another route that is already searched, determines that the own route and the other route overlap with each other. According to this configuration, it is possible to search for the routes by considering another route.
(5) The route generation device 10 includes the communication device 14 configured to communicate with the vehicle 15. The routes are movement routes of the vehicle 15. The processing device 13 generates the movement routes of the vehicle and transmits route information indicating the generated movement routes to the vehicle 15 via the communication device 14. According to this configuration, the vehicle 15 can move on the routes generated by the route generation device 10.
(6) The processing device 13 generates the plurality of routes corresponding to each of a plurality of vehicles 15 and transmits information indicating the generated routes to each vehicle 15 via the communication device 14. Each vehicle 15 moves on the routes generated by the processing device 13. Accordingly, each vehicle 15 can move without intersecting with each other. That is, it is possible to avoid collision between the vehicles 15.
(7) A globally optimized route can be derived through a preliminary planning stage. Global optimization means optimization of all of the plurality of routes instead of optimizing only some of the plurality of routes. Global optimization includes generation of the global shortest route for the plurality of routes. Thus, it is possible to reduce unnecessary turning or detouring of the vehicle 15. Accordingly, fuel consumption of the vehicle 15 can be reduced.
(8) When a sudden change in course occurs, it is possible to instantly search for an optimal route from a point of the change in course by considering the route of another vehicle 15.

### <Other Embodiments>

The present embodiment may be modified as follows.
·The processing device 13, when the routes overlap with each other, may generate a resumption point and start searching again from the resumption point. The processing device 13 compares the scores S of the overlapping meshes of two routes and sets the search resumption point on a route that is not prioritized, that is, a route of which the score S is worse. The processing device 13 sets, for example, a point of "1/2" or "1/3" of a route length from the start point to the overlapping mesh as the search resumption point. Then, the processing device 13 starts searching again from the resumption point. A range of searching to be performed again is reduced compared to that when searching is performed again from the start point. Thus, a search time can be reduced.
·The score S may be weighted by a distance. For example, a vertical or horizontal distance, that is, the vertical or horizontal movement cost α, is set to, for example, "2" instead of "1". In this case, a vertical or horizontal route is unlikely to be selected, and a diagonal route is selected with priority compared to the vertical or horizontal route. In addition, the score S may be weighted by a parameter other than the distance. Examples of the parameter include time and a fuel amount.
·A time axis may be added to the maps used for the route search. By doing so, constraints related to route generation are relieved. Thus, it is possible to generate the routes more flexibly. Depending on speeds, current positions, and the like of the vehicles 15, the processing device 13 determines that the vehicles 15 do not collide with each other even when the routes of the vehicles 15 intersect with each other. The plurality of vehicles 15 only need not be present at the same position at the same time.
·A space axis may be added to the maps used for the route search. By doing so, for example, the present embodiment can be applied to generation of a route of a flying body such as an unmanned aircraft. Even when the routes of the vehicles 15 intersect with each other, the processing device 13 determines that the vehicles 15 do not collide with each other when heights of the routes are different.
·The routes generated by the route generation device 10 are not limited to the routes of the vehicle 15. The route generation device 10 may generate, for example, pipe routes or wire routes. By executing the route search processing using the PA^{*} algorithm, it is possible to efficiently search for the shortest route of a plurality of pipes or the shortest route of a plurality of wires. In addition, the processing device 13 may generate the pipe routes or the wire routes and output the generated pipe routes or the wire routes via the output device 12. Output includes display of the generated pipe routes or the generated wire routes on a screen of the output device 12. By doing so, the pipe routes or the wire routes generated by the route generation device 10 can be visually checked via the output device 12.
·In the present specification, "at least one of A and B" means "only A, only B, or both A and B". For example, when "A" is replaced with the start point, and "B" is replaced with the goal point, the "plurality of routes of which at least one of the start point and the goal point is different" include the following three cases C1 to C3. Note that the start point and the goal point are different for each of the plurality of routes.

C1. A plurality of routes of which only the start point is different. The goal points of the plurality of routes are the same.

C2. A plurality of routes of which only the goal point is different. The start points of the plurality of routes are the same.

C3. A plurality of routes of which both the start point and the goal point are different.

Case C3 includes, for example, a combination of a first route of "start point (a1) and goal point (b1)" and a second route of "start point (a2) and goal point (b2)". The first route and the second routes have different start points and different goal points.

Case C3 also includes, for example, a combination of a first route of "start point (a) and goal point (b)" and a second route of "start point (b) and goal point (a)". The first route and the second route have opposite start points and opposite goal points and have different start points and different goal points.

### <Appendix>

For example, the route generation device according to the present embodiment is understood as follows.
1. A route generation device (10) according to a first aspect includes a processing device (13) configured to search for a plurality of routes of which at least one of a start point and a goal point is different. The processing device (13) is configured to start searching for the plurality of routes at the same time and search for the routes in parallel while comparing information on the plurality of routes.
   The route generation device according to the first aspect can search for the routes by considering another route. Accordingly, it is possible to efficiently search for the plurality of routes.
2. A route generation device (10) according to a second aspect is the route generation device (10) according to the first aspect, in which the processing device (13) is configured to divide each of a plurality of maps, each being independently set for each of the routes, into vertical and horizontal meshes and search for the mesh having a low value of a score calculated for each mesh with priority. The score is a sum of an actual cost that is a movement distance from the start point to a current point, and an estimated cost that is the shortest distance from the current point to the goal point. The processing device (13) is configured to search for the routes while comparing the scores for each of the routes.
   According to the route generation device according to the second aspect, by searching for the routes while comparing the scores for each of the routes, it is possible to efficiently search for the plurality of routes.
3. A route generation device (10) according to a third aspect is the route generation device (10) according to the second aspect, in which the processing device (13) is configured to, when two of the routes overlap with each other to have an overlapping part, compare the score of an overlapping mesh that is a mesh corresponding to the overlapping part of one of the routes with the score of an overlapping mesh that is a mesh corresponding to the overlapping part of the other of the routes, set the overlapping mesh of the route having a higher value of the score as a passage-prohibited region, and search for the routes again until the routes overlap with each other again.
   According to the route generation device (10) according to the third aspect, by repeating the setting of the passage-prohibited region and the searching for the routes again through comparison between the scores for each of the routes, it is possible to generate the global shortest route for the plurality of routes.
4. A route generation device (10) according to a fourth aspect is the route generation device (10) according to the third aspect, in which the processing device (13) is configured to, when the mesh of an own route that is being searched is included in the mesh of another route that is already searched, determine that the own route and the other route overlap with each other.
   According to the route generation device (10) according to the fourth aspect, it is possible to search for the routes by considering another route.
5. A route generation device (10) according to a fifth aspect is the route generation device (10) according to any one of the first to fourth aspects, further including a communication device (14) configured to communicate with a vehicle (15). The routes are movement routes of the vehicle (15). The processing device (13) is configured to generate the movement routes of the vehicle and transmit route information indicating the generated movement routes to the vehicle (15) via the communication device (14).
   According to the route generation device (10) according to the fifth aspect, the vehicle can move on the routes generated by the route generation device.
6. A route generation device (10) according to a sixth aspect is the route generation device (10) according to any one of the first to fourth aspects, further including an output device (12) configured to display various types of information. The routes are pipe routes or wire routes. The processing device (13) is configured to generate the pipe routes or the wire routes and display the generated pipe routes or the generated wire routes on the output device (12).
   According to the route generation device (10) according to the sixth aspect, the pipe routes or the wire routes generated by the route generation device can be checked via the output device.
7. A route generation method according to a seventh aspect includes starting to search, at the same time, for a plurality of routes of which at least one of a start point and a goal point is different, and searching for the plurality of routes in parallel while comparing information on the plurality of routes.
   According to the route generation method according to the seventh aspect, it is possible to search for the routes by considering another route. Accordingly, it is possible to efficiently search for the plurality of routes.
8. A route generation program according to an eighth aspect causes a computer to execute a process of starting to search, at the same time, for a plurality of routes of which at least one of a start point and a goal point is different, and a process of searching for the plurality of routes in parallel while comparing information on the plurality of routes.

According to the route generation program according to the eighth aspect, it is possible to search for the routes by considering another route. Accordingly, it is possible to efficiently search for the plurality of routes.

## Claims

1. A route generation device comprising:
a processing device configured to search for a plurality of routes of which at least one of a start point and a goal point is different,
wherein the processing device is configured to start searching for the plurality of routes at the same time and search for the routes in parallel while comparing information on the plurality of routes.

2. The route generation device according to Claim 1, wherein:
the processing device is configured to divide each of a plurality of maps, each being independently set for each of the routes, into vertical and horizontal meshes and search for the mesh having a low value of a score calculated for each mesh with priority;
the score is a sum of an actual cost that is a movement distance from the start point to a current point, and an estimated cost that is a shortest distance from the current point to the goal point; and
the processing device is configured to search for the routes while comparing the scores for each of the routes.

3. The route generation device according to Claim 2, wherein:
the processing device is configured to, when two of the routes overlap with each other to have an overlapping part, compare the score of an overlapping mesh that is a mesh corresponding to the overlapping part of one of the routes with the score of an overlapping mesh that is a mesh corresponding to the overlapping part of the other of the routes, set the overlapping mesh of the route having a higher value of the score as a passage-prohibited region, and search for the routes again until the routes overlap with each other again.

4. The route generation device according to Claim 3, wherein:
the processing device is configured to, when the mesh of an own route that is being searched is included in the mesh of another route that is already searched, determine that the own route and the other route overlap with each other.

5. The route generation device according to any one of Claims 1 to 4, further comprising:
a communication device configured to communicate with a vehicle, wherein:
the routes are movement routes of the vehicle, and
the processing device is configured to generate the movement routes of the vehicle and transmit route information indicating the generated movement routes to the vehicle via the communication device.

6. The route generation device according to any one of Claims 1 to 4, further comprising:
an output device configured to display various types of information, wherein:
the routes are pipe routes or wire routes, and
the processing device is configured to generate the pipe routes or the wire routes and display the generated pipe routes or the generated wire routes on the output device.

7. A route generation method comprising:
starting to search, at the same time, for a plurality of routes of which at least one of a start point and a goal point is different; and
searching for the plurality of routes in parallel while comparing information on the plurality of routes.

8. A route generation program causing a computer to execute:
a process of starting to search, at the same time, for a plurality of routes of which at least one of a start point and a goal point is different; and
a process of searching for the plurality of routes in parallel while comparing information on the plurality of routes.
